# EUROPÄISCHE PATENTANMELDUNG

(11) **EP 1 796 229 A2**
(43) Veröffentlichungstag der Anmeldung: **13.06.2007**
(21) Anmeldenummer: 06123648.5
(22) Anmeldetag: 08.11.2006
(51) Int. Cl.: H01S 3/23

(54) **Ferndetektionsvorrichtung und Ferndetektionsverfahren**

(30) Priorität: 06.12.2005 DE 102005059500
(71) Anmelder: Deutsches Zentrum für Luft- und Raumfahrt e.V., 51147 Köln (DE)
(72) Erfinder: Klingenberg, Hans H., 72072, Tübingen (DE); Mahnke, Peter, 70195, Stuttgart (DE); Spindler, Gerd, 79761, Waldshut-Tiengen (DE)
(74) Vertreter: Hoeger, Stellrecht & Partner Patentanwälte

(57) **Zusammenfassung**

Um eine Ferndetektionsvorrichtung, umfassend eine Licht-Sendereinrichtung mit einem optischen parametrischen Oszillator, eine Detektionseinrichtung zur Detektion von rückgestreutem Licht, und eine Auswertungseinrichtung, auszubilden, welche mechanisch stabil ist, ist vorgesehen, dass die Licht-Sendereinrichtung ein Master-Oszillator-Verstärker-System umfasst, welches an den optischen parametrischen Oszillator gekoppelt ist, mit einem Laseroszillator als Master-Oszillator, welcher einen Monomoden-Pulsstrahl emittiert, und mit einer dem Laseroszillator nachfolgenden Verstärkereinrichtung, welche das Laserlicht verstärkt, wobei die Verstärkereinrichtung an den optischen parametrischen Oszillator gekoppelt ist.

## Beschreibung

Die Erfindung betrifft eine Ferndetektionsvorrichtung, umfassend eine Licht-Sendereinrichtung mit einem optischen parametrischen Oszillator, eine Detektionseinrichtung zur Detektion von rückgestreutem Licht, und eine Auswertungseinrichtung.

Die Erfindung betrifft ferner ein Ferndetektionsverfahren, bei dem Lichtpulse auf ein Messfeld gerichtet werden und rückgestreutes Licht detektiert wird, wobei das Sendelicht mittels eines optischen parametrischen Oszillators erzeugt wird.

Mit einem solchen System, welches insbesondere mobil ist und beispielsweise durch ein Fluggerät getragen ist, lassen sich u.a. Erdgasleitungen bezüglich Lecks überwachen.

Aus der WO 2004/094968 A1 ist eine mobile Ferndetektionsvorrichtung für Methangasansammlungen bekannt, umfassend eine Sendereinrichtung mit einer Lichtquelle zur Erzeugung von Licht, dessen Wellenlänge mit der spektralen Signatur von Methan abgestimmt ist, wobei das Licht auf ein Messfeld richtbar ist, eine Detektoreinrichtung zur Detektion von rückgestreutem Licht, und eine Auswertungseinrichtung, wobei die Lichtquelle Licht einer Wellenlänge erzeugt, bei der Methan absorbiert, und die Lichtquelle einen optischen parametrischen Oszillator mit Seed-Injektion umfasst, welchem ein Pumplaser zugeordnet ist, welcher in Seed-Injektion betrieben ist.

Aus der EP 0 489 546 A2 ist eine Vorrichtung zur Verwendung in einer sich bewegenden luftgetragenen Plattform bekannt, welche zur Detektion eines Zielgases in der Atmosphäre dient. Die Vorrichtung umfasst eine verstimmbare Laserquelle mit einem Festkörperlaser. Dieser ist mit zwei abstimmbaren Laserdioden verbunden, um mindestens zwei abstimmbare Laserstrahlen im Infrarotbereich zu erzeugen. Mindestens ein Strahl ist abstimmbar auf die Resonanzfrequenz des Zielgases und mindestens ein Strahl ist abstimmbar auf eine Off-Resonanzfrequenz des Zielgases. Über entsprechende Mittel lassen sich die Strahlen durch die Atmosphäre auf eine reflektierende Oberfläche an Land oder auf See so richten, dass die Strahlen koaxial gesendet werden. Der On-Resonanzstrahl wird durch die Anwesenheit des Zielgases gedämpft und der Off-Resonanzstrahl wird durch das Zielgas nicht gedämpft. Über entsprechende Mittel lässt sich die reflektierte Laserstrahlung sammeln. Über weitere Mittel lässt sich ein Differenzsignal erzeugen, welches durch die Differenz in den Energien zwischen dem reflektierten Laserstrahl, welcher durch das Zielgas absorbiert wird, und dem reflektierten Laserstrahl, welcher durch das Zielgas nicht absorbiert wird, bestimmt ist.

In dem Artikel "Injection-seeded optical parametric oscillator for rangeresolved DIAL measurements of atmospheric methane" von M.J.T. Milton et al., Optics Communications 142 (1997), Seiten 153 - 160 ist ein geseedeter optischer parametrischer Oszillator beschrieben, bei dem eine Pulsinjektion erfolgt. Es wurde untersucht, ob ein solches System geeignet ist für Infrarot-DIAL (Differential Absorption Lidar).

Der Erfindung liegt die Aufgabe zugrunde, ein Ferndetektionsvorrichtung der eingangs genannten Art auszubilden, welche mechanisch stabil ist.

Diese Aufgabe wird bei der eingangs genannten Ferndetektionsvorrichtung erfindungsgemäß dadurch gelöst, dass die Licht-Sendereinrichtung ein Master-Oszillator-Verstärker-System umfasst, welches an den optischen parametrischen Oszillator gekoppelt ist, mit einem Laseroszillator als Master-Oszillator, welcher einen Monomoden-Pulsstrahl emittiert, und mit einer dem Laseroszillator nachfolgenden Verstärkereinrichtung, welche das Laserlicht verstärkt, wobei die Verstärkereinrichtung an den optischen parametrischen Oszillator gekoppelt ist.

Es hat sich gezeigt, dass, wenn ein Pumplaser direkt Licht einem optischen parametrischen Oszillator bereitstellt, eine Längenregelung des Pumplaserresonators notwendig ist; insbesondere ist eine aktive Längenregelung notwendig. Eine solche Längenregelung dient zur Stabilisierung der Länge des Resonators, um sicherzustellen, dass der Pumplaser nur auf einer Schwingungsmode arbeitet. Instabilitäten der Länge können zu einem mehrmodigen Ausgangslicht führen. Die mechanischen Erschütterungen beispielsweise in einem Fluggerät wie einem Hubschrauber wiederum beeinflussen die Längenstabilität.

Bei der erfindungsgemäßen Lösung ist ein Laseroszillator vorgesehen, der entsprechend frequenzstabil im Monomoden-Pulsbetrieb Licht, nämlich eine hochrepetitive Pulsfolge, emittiert. Solche Laseroszillatoren sind kommerziell erhältlich. Sie sind kompakt aufgebaut und stabil. Über die Verstärkereinrichtung erfolgt eine Nachverstärkung, wobei keine Längenstabilisierung nötig ist. Durch die entsprechende Licht-Sendereinrichtung lassen sich Mehrfachpulse wie beispielsweise eine Doppelpuls-Folge bereitstellen.

Durch die erfindungsgemäße Lösung lässt sich eine mechanisch stabile Licht-Sendereinrichtung bereitstellen, bei der insbesondere keine aktive Längenregelung notwendig ist. Sie kann beispielsweise auch in einem Fluggerät eingesetzt werden.

Die Licht-Sendereinrichtung umfasst ein (frequenzstabiles) Master-Oszillator-Verstärker-System, welches an den optischen parametrischen Oszillator gekoppelt ist. Der Laseroszillator bildet einen Master-Oszillator, welcher einen Monomoden-Pulsstrahl der Verstärkereinrichtung bereitstellt. Der Laseroszillator kann Laserlicht mit niedriger Leistung aber hoher räumlicher und longitudinaler Kohärenz bereitstellen. Das Laserlicht lässt sich durch die Verstärkungseinrichtung auf hohe Leistung verstärken.

Ganz besonders vorteilhaft ist es, wenn der Laseroszillator frequenzstabil ist. Dadurch lässt sich ein Monomoden-Pulsstrahl hoher Stabilität bereitstellen.

Beispielsweise ist der Laseroszillator in (aktiver oder passiver) Güteschaltung betrieben. Dadurch kann ein Monomoden-Pulsstrahl mit hoher Frequenzstabilität und Abstandsstabilität bezüglich des Pulsabstandes erzeugt werden.

Günstig ist es, wenn der Laseroszillator stabil ist bezüglich des Abstands von emittierten Pulsen. Dadurch lässt sich dann auf einfache Weise beispielsweise durch Pulsschneidung eine Doppelpuls-Pulsfolge erzeugen.

Es kann vorgesehen sein, dass der Laseroszillator ein Mikrochiplaser (welcher insbesondere gütegeschaltet ist) oder ein monolithischer Ringlaser ist. Solche Laseroszillatoren sind kommerziell erhältlich.

Insbesondere bildet der Laseroszillator eine kompakte Einheit. Dadurch lässt sich die entsprechende Licht-Sendereinrichtung kompakt aufbauen mit hoher mechanischer Stabilität.

Günstig ist es, wenn die Verstärkereinrichtung ein Verstärkungsmedium aufweist. Beispielsweise ist ein Laserstab vorgesehen. Dadurch lässt sich eine effektive Verstärkung mit einem hohen Verstärkungsfaktor (Gain) erzielen.

Vorteilhafterweise ist die Verstärkereinrichtung so ausgebildet, dass ein mindestens zweifacher Strahldurchgang durch das Verstärkungsmedium erfolgt. Dadurch lässt sich auf einfache und platzsparende Weise eine hohe Verstärkung erreichen.

In diesem Zusammenhang ist es ganz besonders vorteilhaft, wenn die Verstärkereinrichtung so ausgebildet ist, dass ein vierfacher Strahldurchgang durch das Verstärkungsmedium erfolgt. Ein Beispiel für eine entsprechende Verstärkereinrichtung ist ein an sich bekannter Y-Cavity-Resonator.

Beispielsweise umfasst die Verstärkereinrichtung eine Y-Cavity. Bei einer Y-Cavity ist bezogen auf den Strahlgang zwischen einem ersten Spiegel und einem zweiten Spiegel ein Verstärkungsmedium angeordnet, wobei ein Polarisator und ein Polarisationsrotator vorgesehen sind. Die Strahlführung ist derart, dass das Verstärkungsmedium vierfach durchlaufen wird und ein entsprechender Verstärkungsfaktor erzielt wird. Durch Polarisations-Flip-Vorgänge lässt sich an dem Polarisator je nach Polarisation eine Reflexion oder einen Durchgang erreichen, um so den vierfachen Durchlauf durch das Verstärkungsmedium und nach vierfachem Durchlauf die Auskopplung zu bewirken.

Insbesondere umfasst die Y-Cavity einen ersten Spiegel und einen zweiten Spiegel, zwischen denen bezogen auf den Strahlgang ein Verstärkungsmedium angeordnet ist. Die Anordnung des ersten Spiegels und des zweiten Spiegels bezüglich deren genauen Abstands ist dabei unkritisch, das heißt es ist keine Längenregelung erforderlich, um eine hohe Verstärkung zu erzielen.

Es ist ferner vorgesehen, dass bezogen auf den Strahldurchgang zwischen dem Verstärkungsmedium und dem ersten Spiegel ein Polarisationsrotator angeordnet ist. Dieser ändert die Polarisation des Lichts, um durch entsprechende Polarisations-Flip-Prozesse einen vierfachen Durchlauf des Verstärkungsmediums zu ermöglichen.

Günstigerweise ist dem zweiten Spiegel ein Polarisator zugeordnet. Dieser ist beispielsweise als dünner Film ausgebildet. Durch den Polarisator lässt sich je nach Polarisation des Lichts eine Reflexion oder ein Durchgang erreichen, um das Licht mehrfach das Verstärkungsmedium durchlaufen zu lassen bzw. um Licht nach vierfachem Durchlaufen des Verstärkungsmediums auskoppeln zu können.

Günstigerweise ist der Polarisator reflektierend ausgebildet, wobei ein Lichtstrahl vom Verstärkungsmedium durch den Polarisator zum zweiten Spiegel richtbar ist. Dadurch lässt sich nach zweimaligem Durchlaufen eines Verstärkungsmediums ein nochmaliges zweimaliges Durchlaufen erreichen.

Günstig ist es ferner, wenn ein Lichtstrahl vom zweiten Spiegel durch den Polarisator zum Verstärkungsmedium richtbar ist, um ein vierfaches Durchlaufen des Verstärkungsmediums zu erreichen.

Günstigerweise ist der Polarisator für Licht durchlässig, wobei die Durchlässigkeit abhängig von der Lichtpolarisation ist. Dadurch lässt sich auf einfache Weise zu verstärkendes Licht einkoppeln und verstärktes Licht auskoppeln. Ferner lässt sich eine Reflexion erreichen, um einen vierfachen Durchgang von Licht durch das Verstärkungsmedium zu bewirken.

Es kann vorgesehen sein, dass die Verstärkereinrichtung mindestens eine Nachverstärkungsstufe umfasst. In der Nachverstärkungsstufe kann ein einfacher Durchgang durch ein Verstärkungsmedium oder auch ein mehrfacher Durchgang wie ein zweifacher Durchgang oder ein vierfacher Durchgang erfolgen. Die Nachverstärkungsstufe kann erforderlich sein, wenn die Verstärkung in einer ersten Verstärkungsstufe wie einer Y-Cavity nicht ausreicht. Die kann beispielsweise der Fall sein, wenn die von dem Laseroszillator emittierten Pulse einen kleinen zeitlichen Abstand voneinander haben.

Insbesondere ist ein Verstärkungsfaktor durch die Verstärkereinrichtung bezogen auf die Pulsenergie eines einzelnen Pulses des Laseroszillators mindestens 200. Dadurch lassen sich Pulse mit entsprechend hoher Pulsenergie dem optischen parametrischen Oszillator bereitstellen, um beispielsweise LIDAR-DIAL-Ferndetektionsverfahren durchführen zu können.

Insbesondere ist die Pulsenergie eines Pulses, welcher dem optischen parametrischen Oszillator zugeführt wird, mindestens 10 mJ und vorzugsweise mindestens 15 mJ. Dadurch ist es beispielsweise möglich, bei einer hubschraubergetragenen Vorrichtung aus einer Höhe von 80 m bis 140 m Methan mit Ausströmraten von 10 bis 200 l/h aus einer Erdgasleitung zu detektieren.

Günstig ist es, wenn ein Pulsabstand für die vom Laseroszillator emittierte Pulse im Bereich von 25 µs und 200 µs liegt. Beispielsweise liegt der Pulsabstand bei 50 µs oder 100 µs. Dadurch lässt sich sicherstellen, dass der zeitliche Abstand eines Absorptionslichtpulses mit einer Absorptionswellenlänge und eines Referenzlichtpulses mit einer Nicht-Absorptionswellenlänge angepasst an eine Bewegungsgeschwindigkeit eines Trägers für die entsprechende Ferndetektionsvorrichtung ist; es lässt sich ein räumlicher Überlapp zwischen dem vom Absorptionslichtpuls beleuchteten Messfeld und dem vom Referenzlichtpuls beleuchteten Messfeld erreichen. Dies ist in der WO 2004/094968 A1 beschrieben, auf die Bezug genommen wird.

Ganz besonders vorteilhaft ist es, wenn eine Zuführung von Doppelpulsen zu dem optischen parametrischen Oszillator vorgesehen ist. Dadurch lassen sich auf einfache Weise On-Line-Lichtpulse und Off-Line-Lichtpulse für ein DIAL-Verfahren bereitstellen.

Insbesondere ist eine Doppelpulsfrequenz größer als 150 Hz. Dadurch lässt sich eine entsprechend hohe Repetitionsrate zur Prüfung erreichen.

Günstigerweise liegt der Abstand von Pulsen in einem Pulspaar zwischen 25 µs und 200 µs. Dadurch lässt sich bei einer mobilen Ferndetektionsvorrichtung, welche beispielsweise durch einen Hubschrauber getragen ist, ein räumlicher Überlapp zwischen einem von Absorptionslichtpulsen beleuchteten Messfeld und einem von Referenzlichtpulsen beleuchteten Messfeld erreichen.

Günstigerweise ist eine Steuerungseinrichtung zur Synchronisierung der Pulseinkopplung in die Verstärkereinrichtung vorgesehen. Dadurch lässt sich sicherstellen, dass eine effektive Verstärkung von Pulsen in der Verstärkereinrichtung erfolgt.

Günstig ist es, wenn eine Mehrfachpuls-Formungseinrichtung zur Erzeugung von Mehrfachpulsen vorgesehen ist. Durch die Mehrfachpuls-Formungseinrichtung werden insbesondere Doppelpulse erzeugt. Es lassen sich dann On-Line-Lichtpulse und Off-Line-Lichtpulse bereitstellen.

Bei einer Ausführungsform umfasst die Mehrfachpuls-Formungseinrichtung eine Pulsschneideeinrichtung, welche dem Laseroszillator nachgeordnet ist.

Durch die Pulsschneideeinrichtung lässt sich insbesondere auf elektronische Weise eine Doppelpulsfolge erzeugen, wobei die "nicht benötigten Pulse" aus der von dem Laseroszillator emittierten Pulsfolge herausgeschnitten werden können.

Es ist auch möglich, dass die Mehrfachpuls-Formungseinrichtung eine Steuerungseinrichtung umfasst, über welche die Verstärkung in der Verstärkereinrichtung so steuerbar ist, dass Mehrfachpulse einer vorgegebenen Repetitionsrate erzeugbar sind. Über die Steuerungseinrichtung lässt sich die Verstärkereinrichtung so ansteuern und insbesondere so strombeaufschlagen, dass Mehrfachpulse und insbesondere Doppelpulse der vorgegebenen Repetitionsrate erzeugt werden. Es werden nur Pulse verstärkt, die zu der erwünschten Doppelpulsfolge beitragen. Die Mehrfachpuls-Formungseinrichtung ist dann mindestens partiell in die Verstärkereinrichtung integriert.

Insbesondere ist die Steuerungseinrichtung mit dem Laseroszillator zur Synchronisierung mit der Verstärkereinrichtung gekoppelt. Dadurch lässt sich bezogen auf die Pulsfolge, welche von dem Laseroszillator erzeugt wird, eine Synchronisierung an der Verstärkereinrichtung durchführen, um nur diejenigen Pulse zu verstärken, die zu der gewünschten Mehrfachpulsfolge und insbesondere Doppelpulsfolge beitragen.

Insbesondere lassen sich durch die Pulsschneideeinrichtung Doppelpulse generieren, um dem optischen parametrischen Oszillator Doppelpulse zur Erzeugung von On-Line-Lichtpulsen und Off-Line-Lichtpulsen bereitstellen zu können.

Der Erfindung liegt ferner die Aufgabe zugrunde, ein Ferndetektionsverfahren der eingangs genannten Art bereitzustellen, welches gegenüber mechanischen Erschütterungen wenig anfällig ist.

Diese Aufgabe wird bei dem eingangs genannten Ferndetektionsverfahren erfindungsgemäß dadurch gelöst, dass dem optischen parametrischen Oszillator Lichtpulse durch ein Master-Oszillator-Verstärker-System bereitgestellt werden.

Das erfindungsgemäße Ferndetektionsverfahren weist die bereits im Zusammenhang mit der erfindungsgemäßen Ferndetektionsvorrichtung erläuterten Vorteile auf.

Weitere vorteilhafte Ausgestaltungen wurden ebenfalls bereits im Zusammenhang mit der erfindungsgemäßen Ferndetektionsvorrichtung erläutert.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung einer Ferndetektionsvorrichtung für Gasansammlung zur Erläuterung des LIDAR-Verfahrens und des DIAL-Verfahrens;
- Figur 2: eine schematische Blockbilddarstellung eines Ausführungsbeispiels einer erfindungsgemäßen Ferndetektionsvorrichtung;
- Figur 3: eine vergrößerte Darstellung eines Master-Oszillator-Verstärker-Systems gemäß Figur 2 in Blockbilddarstellung;
- Figur 4: eine schematische Darstellung einer Verstärkereinrichtung des Master-Oszillator-Verstärker-Systems gemäß Figur 3;

- Figur 5: schematische Darstellungen von Pulsfolgen, wobei in Figur 5(a) die Pulsfolge gezeigt ist, welche von einem Laseroszillator emittiert wird, in Figur 5(b) die Pulsfolge nach Durchlaufen einer Pulsschneideeinrichtung gezeigt ist und in Figur 5(c) die Pulsfolge nach Durchlaufen einer Verstärkereinrichtung gezeigt ist; und
- Figur 6: eine schematische Darstellung eines Einsatzbeispiels für die erfindungsgemäße Ferndetektionsvorrichtung.

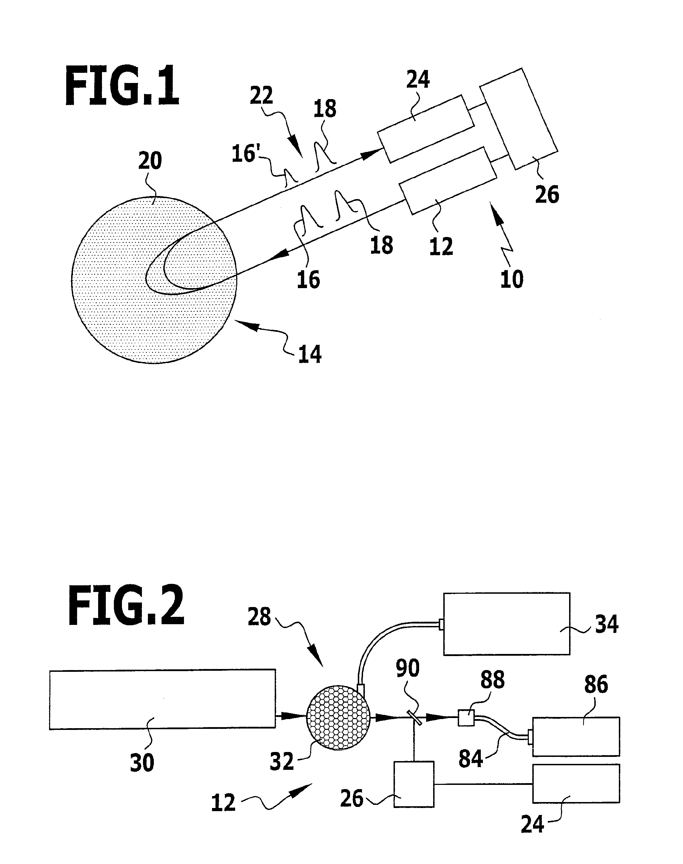

Eine Ferndetektionsvorrichtung gemäß der Erfindung, welche in Figur 1 schematisch gezeigt und dort als Ganzes mit 10 bezeichnet ist, umfasst eine Licht-Sendereinrichtung 12 für Laserlicht mit einer entsprechenden Sendeoptik, durch die das Licht auf ein Messfeld 14 richtbar ist.

Die Licht-Sendereinrichtung 12 weist, wie unten noch näher beschrieben wird, eine Lichtquelle auf, welche Laserlichtpulse 16, 18 aussendet. Die Wellenlänge dieser Pulse 16, 18 ist dabei auf die spektrale Signatur des oder der zu detektierenden Medien angepasst. Bei dem zu detektierenden Medium handelt es sich beispielsweise ein um Gas wie Methan und/oder Ethan. Von einer entsprechenden Gasansammlung 20 rückgestreutes Licht 22 wird von einer Detektionseinrichtung 24 mit entsprechender Empfängeroptik erfasst. Zur Auswertung ist eine Auswertungseinrichtung 26 vorgesehen, welche mit der Licht-Sendereinrichtung 12 und insbesondere einer Steuerung der Licht-Sendereinrichtung 12 in Verbindung steht und welche für eine Analyse der Messergebnisse sorgt.

Die Detektionseinrichtung 24 ist bezogen auf die Richtung des von der Licht-Sendereinrichtung 12 ausgesandten Sendelichts starr gekoppelt.

Ein solches auf Laserlicht basierendes, aktives optischen Ortungsverfahren, bei dem rückgestreutes Licht nachgewiesen und analysiert wird, wird auch als LIDAR-Verfahren bezeichnet (LIDAR-Light Detecting and Ranging).

Bei dem DIAL-Verfahren (DIAL-Differential Absorption Lidar) werden die Absorptionseigenschaften des zu detektierenden Mediums unter Anwendung des Beer-Lambertschen-Absorptionsgesetzes genutzt. Es werden Lichtpulse 16, 18 unterschiedlicher Wellenlänge ausgesandt: Der Lichtpulse 16, welcher auch als On-Line-Puls bezeichnet wird, weist eine Wellenlänge auf, welche einer Absorptionswellenlänge des zu detektierenden Mediums entspricht. Das entsprechende Licht wird von dem Medium absorbiert. Der zeitlich versetzt ausgesandte Lichtpuls 18 dagegen weist eine Wellenlänge auf, bei der das Licht nicht absorbiert wird. Der Lichtpuls 18 wird auch als Off-Line-Lichtpuls bezeichnet. Er dient als Referenzpuls.

Der Referenzpuls kann auch vor dem Absorptionspuls ausgesandt werden.

Das LIDAR-Verfahren und das DIAL-Verfahren sind in Abschnitt 15.2.2 in W. Demtröder, Laser Spectroscopy, Corrected Printing 1998, Springer-Verlag im Zusammenhang mit atmosphärischen Messungen beschrieben. Es wird ausdrücklich Bezug auf diese Veröffentlichung genommen.

Ist im Messfeld 14 zu detektierendes Medium vorhanden, dann ist rückreflektiertes Licht 16', welches auf den Lichtpuls 16 zurückgeht, aufgrund von Absorption in der Gasansammlung 20 im Vergleich zu dem Sende-Lichtpuls 16 abgeschwächt. Ein rückreflektierter Referenzlichtpuls 18' ist dagegen weit weniger abgeschwächt. Durch einen Intensitätsvergleich lässt sich das Produkt aus Gaskonzentration und Absorptionsquerschnitt ermitteln.

Ein Ausführungsbeispiel einer erfindungsgemäßen Ferndetektionsvorrichtung, welches in Figur 2 mit 28 bezeichnet ist, umfasst als Teil der Licht-Sendereinrichtung 12 eine Laserlichtquelle 30. Diese gibt Lichtsignale an einen optischen parametrischen Oszillator 32 (OPO) ab. Ein OPO ist ein nicht-lineares optisches System, mit dem sich kontinuierlich frequenzveränderliche Strahlung erzeugen lässt. Ein OPO umfasst ein geeignetes optisches nicht-lineares Medium, wie beispielsweise einen nicht-linearen Kristall, welches in einem optischen Resonator angeordnet ist. Der OPO 32 ist mittels der Laserlichtquelle 30 gepumpt. Die Wechselwirkung zwischen der Strahlung des kohärenten Pumpfelds der Laserlichtquelle 30 und der nicht-linearen Suszeptibilität des Mediums des OPOs 32 erzeugt zwei frequenzveränderliche Wellen; diese werden als Signalwelle und Idlerwelle bezeichnet. Die Wellenlängen sind durch Energieerhaltung und Impulserhaltung in Form einer Phasenanpassungsbedingung bestimmt. Die Frequenzveränderlichkeit wird durch eine geeignete Änderung der Phasenanpassungsbedingung erreicht.

Geeignete optische Kristalle für einen OPO sind beispielsweise LiNbO₃, KTP, KTA, KNbO₃ oder Materialien mit Quasiphasenanpassung.

Der OPO 32 ist über einen Seedlaser 34 geseedet. Bei der Seed-Injektion (Injection Seeding) wird schmalbandige, kohärente Strahlung einer externen Lichtquelle (Seed-Quelle) in den OPO 32 eingekoppelt. Es handelt sich um ein bekanntes Verfahren, welches beispielsweise in der Veröffentlichung von A. Fix, "Untersuchung der spektralen Eigenschaften von optischen parametrischen Oszillatoren aus dem optisch nicht-linearen Material Betabariumborat", Dissertation, Universität Kaiserslautern, Verlag Schaker, Aachen, 1995, beschrieben ist.

Durch Seeden lässt sich die Linienbreite eines gepulsten OPOs reduzieren, ohne dass die Verluste im OPO-Resonator stark erhöht werden. Die Effizienz des OPO wird durch Seeden nicht verringert, wobei sich die schmale Linienbreite mit einem einfachen Aufbau erzielen lässt. Bezüglich der Seed-Quelle bestehen nur geringe Anforderungen an deren Strahlungsintensität.

Für einen durchstimmbaren OPO muss die Seed-Quelle 34 durchstimmbar sein.

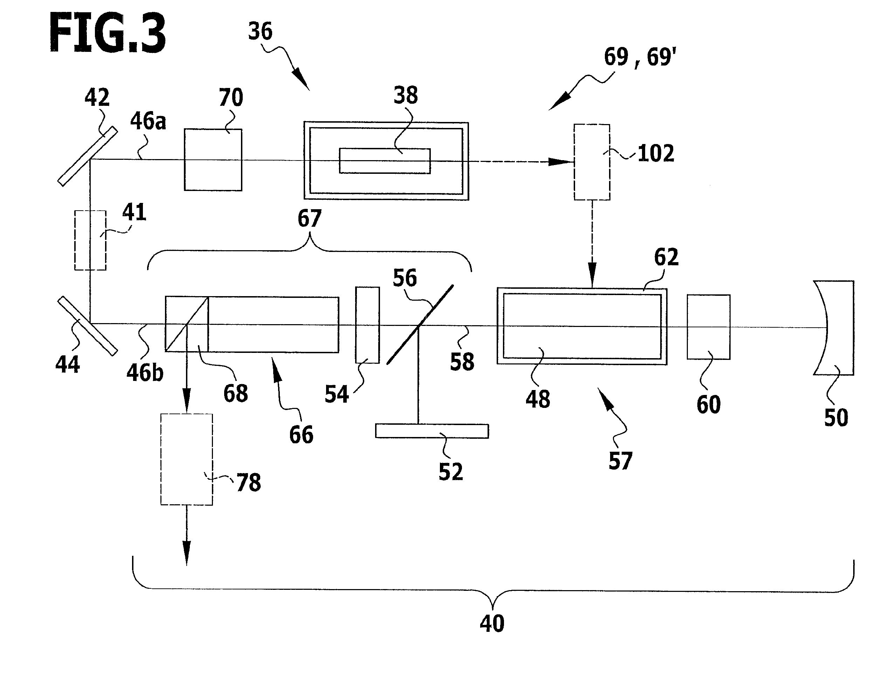

Die Laserlichtquelle 30 ist als Master-Oszillator-Verstärker-System (MOPA-Master Oscillator Power Amplifier) ausgebildet. Ein Ausführungsbeispiel eines solchen Master-Oszillator-Verstärker-Systems 36 umfasst, wie in Figur 3 schematisch gezeigt, einen Laseroszillator 38, welcher frequenzstabil ist und abstandsstabil monomodale Laserlichtpulse abstrahlt. Der Laseroszillator 38 bildet eine kompakte Einheit aus.

Der Laseroszillator 38 ist beispielsweise über einen Mikrochiplaser oder über einen monolithischen Ringlaser gebildet; insbesondere ist der monolithische Ringlaser passiv gütegeschaltet.

Ein Beispiel für einen einsetzbaren Laseroszillator 38 ist das Produkt "Mephisto-Q" der Firma INNOLIGHT GmbH, Hannover, Deutschland. Dieser entsprechende Laseroszillator liefert einen Monomoden-Pulssstrahl mit einer Wellenlänge von 1064 nm. Er umfasst einen passiv gütegeschalteten monolithischen Ringlaser (MISER). Die mittlere Ausgangsleistung liegt in der Größenordnung von 100 mW. Die Pulsdauer beträgt 10 ns und die Pulsenergie ist größer als 30 µJ. Die Pulsfolgefrequenz beträgt 10 kHz oder 20 kHz. Bei diesen Repetitionsraten beträgt der Abstand von Einzelpulsen 100 µs bzw. 50 µs.

Die von dem Laseroszillator 38 abgegebenen Pulse werden durch eine Verstärkereinrichtung 40 verstärkt.

Zwischen dem Laseroszillator 38 und der Verstärkereinrichtung 40 kann ein Faraday-Isolator 41 angeordnet sein, um die Einkopplung von Licht in den Laseroszillator 38 zu verhindern.

Um die Laserlichtquelle 30, welche das Master-Oszillator-Verstärker-System 36 umfasst bzw. durch dieses gebildet ist, kompakt aufbauen zu können, wird der Pulsstrahl des Laseroszillators 38 über einen ersten Umlenkspiegel 42 und über einen zweiten Umlenkspiegel 44 zu der Verstärkereinrichtung 40 gelenkt, wobei ein Lichtstrahl 46a, welcher von dem ersten Umlenkspiegel 42 umgelenkt wird, im wesentlichen parallel zu einem Lichtstrahl 46b ist, welcher von dem Umlenkspiegel 44 zu der Verstärkereinrichtung 40 gerichtet ist.

Die Verstärkereinrichtung 40 umfasst ein Verstärkungsmedium 48, welches bezogen auf den Strahlengang zwischen einem ersten (hochreflektierenden) Spiegel 50 und einem zweiten (hochreflektierenden) Spiegel 52 angeordnet ist. Die Verstärkereinrichtung 40 ist kein längenkritischer Resonator, das heißt die Spiegel 50 und 52 dienen nur zur Reflexion von Licht und deren Abstand beeinflusst die Modenstruktur nicht.

Die Verstärkereinrichtung 40 umfasst eine λ/2-Platte 54 zur Polarisationsoptimierung. Dadurch lässt sich ein optischer Isolator in einer Ebene betreiben.

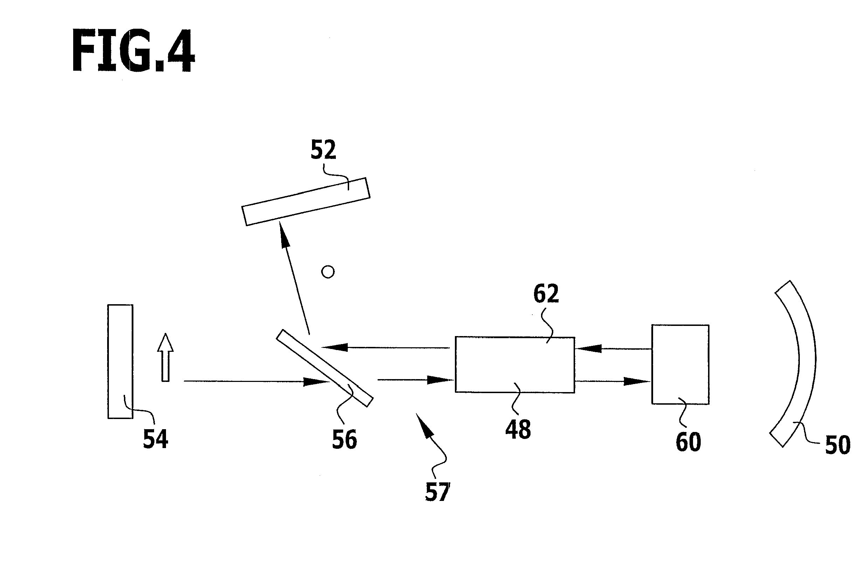

Die Verstärkereinrichtung 40 ist so ausgebildet, dass das Verstärkungsmedium 48 mindestens zweifach und bevorzugterweise vierfach durchlaufen wird, um eine entsprechende Verstärkung zu erhalten. Beispielsweise umfasst die Verstärkereinrichtung 40 eine Y-Cavity 57 (Figuren 3 und 4 bzw. ist als solche ausgebildet). Eine Y-Cavity ist eine Polarisations-Flip-Cavity.

Eine entsprechende Y-Cavity ist beispielsweise in dem Artikel "Polarisation Flip Cavities: A new approach to laser resonators", E. Guiliani und P. Restori, Optics Communications Vol. 35, Seiten 109 bis 112, 1980, insbesondere im Zusammenhang mit der dortigen Figur 2 oder in dem Artikel "Simulations of wave front correction of distorted laser beams", von H. H. Klingenberg, Laser Optics 2000: Control of Laser Beam Characteristics and Non-Linear Method of a Wave Front Control, L. N. Zoms, V. E. Sherstobitov, Editors, Proceedings of S. P. I. E., Vol. 4353, Seiten 230 bis 236 (2001) beschrieben. Auf diese Dokumente wird ausdrücklich Bezug genommen.

Die Y-Cavity 57 umfasst einen Polarisator 56 wie beispielsweise einen Dünnfilmpolarisator, welcher je nach Polarisation durchlässig oder reflektierend ist. Er ist entsprechend geneigt zu einer optischen Achse 58 (Figur 3) angeordnet.

Licht, welches über den Laseroszillator 38 durch einen Faraday-Rotator 66 in einer bestimmten Polarisationsrichtung eingekoppelt wird, durchläuft den Polarisator 56 und durchläuft dann das Verstärkungsmedium 48 zur Verstärkung. Zwischen dem Verstärkungsmedium 48 und dem ersten Spiegel 50 ist ein Polarisationsrotator 60 wie beispielsweise ein Faraday-Rotator angeordnet. Nach Durchlaufen des Polarisationsrotators 60 (mit entsprechender Drehung der Polarisationsrichtung) wird das Licht an dem ersten Spiegel 50 reflektiert, durchläuft nochmals den Polarisationsrotator 60 und das Verstärkungsmedium 48. Es wird dann an dem Polarisator 56 (welcher bei der erreichten Lichtpolarisation reflektierend ist) umgelenkt und auf den zweiten Spiegel 52 gerichtet. Von dort wird es in Richtung des Polarisators 56 reflektiert und von dort auf das Verstärkungsmedium 48 reflektiert und durchläuft dieses nochmals, durchläuft den Polarisationsrotator 60 und wird wiederum an dem ersten Spiegel 50 reflektiert, durchläuft den Polarisationsrotator 60, das Verstärkungsmedium 48 und durchläuft dann den Polarisator 56. Das Licht, welches dann ausgekoppelt wird, hat das Verstärkungsmedium 48 dann vierfach durchlaufen. Es weist die gleiche Polarisation auf, wie das Licht, welches über den Faraday-Rotator 66 eingekoppelt wurde.

Der Polarisator 56 ist so ausgebildet, dass er für Licht einer ersten Polarisationsrichtung durchlässig ist und für Licht einer zweiten Polarisationsrichtung reflektierend ist. Die durchlässige Polarisationsrichtung ist dabei durch die Polarisation des Polarisators 56 bestimmt. Da nach dem ersten zweimaligen Durchlaufen des Verstärkungsmediums die Polarisationsrichtung im Vergleich zu der Einkopplungspolarisation gedreht wurde, wird das Licht in dem Polarisator 56 umgelenkt und nicht durchgelassen. Nach nochmaligem Durchlauf liegt wieder die für das Durchlassen "korrekte" Polarität vor.

Das Verstärkungsmedium 48 ist beispielsweise in einer Pumpkammer (insbesondere QCW-Pumpkammer) mit einem Laserstab angeordnet. Bei einem konkreten Ausführungsbeispiel umfasst die Pumpkammer 62 einen Laserstab (welcher das Verstärkungsmedium 48 bildet) mit einem Durchmesser von 3 mm. Die gepumpte Stablänge beträgt ca. 40 mm. Der Laserstab ist 0,7 und 0,9 at Nd-dotiert.

Die Verstärkereinrichtung 40 umfasst den Faraday-Rotator 66, der dazu dient, ankommende Pulse (von dem Laseroszillator 38 kommend) mit dem Verstärker zu synchronisieren. Es ist insbesondere vorgesehen, dass durch die Verstärkereinrichtung 40 Doppelpulse verstärkt werden oder erzeugt werden (wie unten noch näher erläutert wird).

Dem Faraday-Rotator 66 ist ein Polarisationsteiler 68 mit einer λ/2-Platte und an dieser angeordneten Polarisatoren zugeordnet. Er dient zur Abblockung von Lichtstrahlung und zur Einkopplung von Lichtstrahlung in die Verstärkereinrichtung 40.

Durch den Faraday-Rotator 66 und den Polarisationsteiler 68 sowie den Polarisator 56 ist ein Faraday-Isolator 67 gebildet.

Zur Erzeugung von Mehrfachpulsen und insbesondere Doppelpulsen mit vorgegebener Repetitionsrate ist eine als Ganzes mit 69 bezeichnete Mehrfachpuls-Formungseinrichtung 69 vorgesehen. Bei einer Ausführungsform umfasst die Mehrfachpuls-Formungseinrichtung eine Pulsschneideeinrichtung 70, welche dem Laseroszillator 38 nachgeordnet und der Verstärkereinrichtung 40 vorgeschaltet ist. Die Pulsschneideeinrichtung 70 weist elektronische Schaltelemente und eine Pockels-Zelle auf. Durch die Pulsschneideeinrichtung 70 lassen sich Doppelpulse (zur Erzeugung von On-Line-Pulsen 16 und Off-Line-Pulsen 18) erzeugen, indem aus der von dem Laseroszillator 38 abgegebenen Pulsfolge Pulse herausgeschnitten werden.

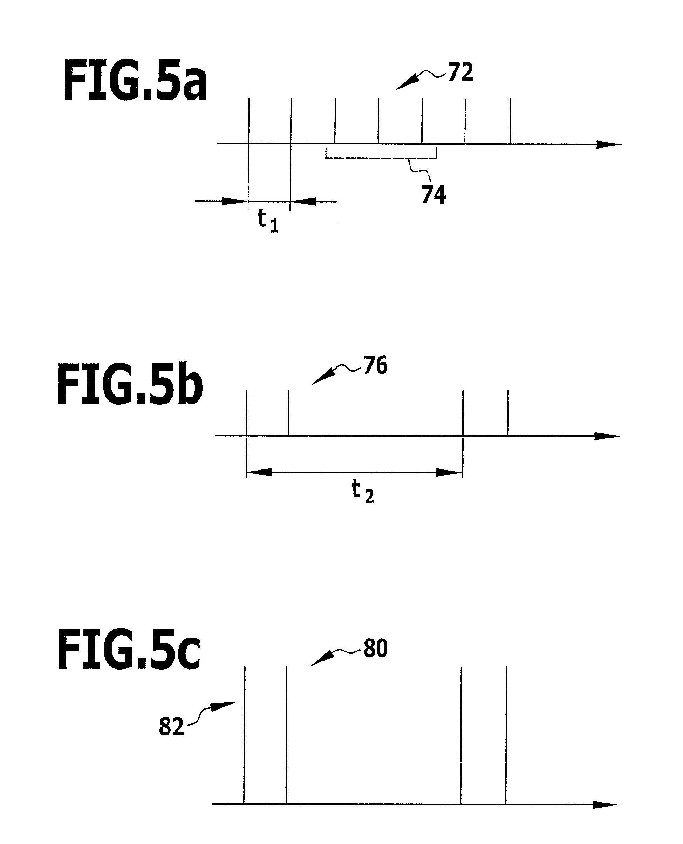

In Figur 5(a) ist schematisch eine Pulsfolge 72 gezeigt, wie sie vom Laseroszillator 38 abgegeben wird. Die Pulse haben einen Abstand t₁, welcher fest ist. Dieser Abstand liegt im Bereich zwischen 25 µs und 200 µs. Beispielsweise liegt er bei 50 µs oder 100 µs.

Über die Pulsschneideeinrichtung 70 werden Pulse 74 herausgeschnitten. Die daraus resultierende Pulsfolge 76 (Figur 5(b)) wird der Verstärkereinrichtung 40 zugeführt. Die Pulse eines Pulspaares (Doppelpuls) haben einen Abstand, welcher dem Abstand t₁ entspricht. Die entsprechenden Pulse unterschiedlicher Doppelpuls-Paare haben einen Abstand t₂, welcher einer Frequenz größer als 150 Hz und insbesondere größer 200 Hz und vorzugsweise 400 Hz entspricht.

Bei einer Doppelpulsfrequenz von 200 Hz ist der Abstand t₂ 5 ms. Insbesondere ist dieser Abstand kleiner oder gleich 2,5 ms.

Die Pulse der Pulsfolge 76 haben die gleiche Pulsenergie wie die Pulse der Pulsfolge 72.

Bei einer alternativen Ausführungsform, welche in Figur 3 mittels strichpunktierten Linien angedeutet ist, werden Mehrfachpulse und insbesondere Doppelpulse mit einer vorgegebenen Repetitionsrate an der Verstärkereinrichtung 40 erzeugt. In diesem Falle ist keine Pulsschneideeinrichtung 70 vorgesehen. Die entsprechende Mehrfachpuls-Formungseinrichtung 69' weist eine Steuerungseinrichtung 102 auf, über welche eine Synchronisierung des Laseroszillators 38 und der Verstärkung in der Pumpkammer 62 durchführbar ist. Über die Steuerungseinrichtung 102 ist die Strombeaufschlagung der Pumpkammer 62 steuerbar.

Durch die Steuerungseinrichtung 102 lässt sich die Nachverstärkung derart synchronisieren, dass der Verstärker Doppelpulse einer vorgegebenen Repetitionsrate liefert.

Durch die Strombeaufschlagung der Pumpkammer 62 werden nur diejenigen Pulse in der Verstärkungseinrichtung 40 verstärkt, welche zu einer Doppelpulsfolge 76 führen. Die Mehrfachpuls-Formungseinrichtung 69' ist mindestens teilweise in die Verstärkereinrichtung 40 integriert.

Durch die Verstärkereinrichtung werden die Doppelpulse der Pulsfolge 76 verstärkt auf eine Pulsenergie, welche vorzugsweise gleich oder größer ist als 15 mJ. Der Verstärkungsfaktor ist vorzugsweise mindestens 200; die Verstärkung ist in Figur 5(c) angedeutet.

Es ist möglich, dass die Verstärkereinrichtung 40 eine Nachverstärkungsstufe 78 umfasst. Die Nachverstärkungsstufe 78 kann als Einfachdurchgangsstufe oder als Mehrfachdurchgangsstufe ausgebildet sein. Sie kann beispielsweise auch als Y-Cavity ausgebildet sein. Es kann beispielsweise sinnvoll sein, wenn der Pulsabstand t₁ klein ist (beispielsweise bei 50 µs liegt), eine Nachverstärkungsstufe vorzusehen.

Durch die Laserlichtquelle 30 werden Doppelpulse bereitgestellt, es heißt es wird eine Pulsfolge 80 mit Pulspaaren 82 bereitgestellt. Die Pulse dieser Pulsfolge 80 weisen eine entsprechend große Pulsenergie auf.

Durch die Ausbildung der Laserlichtquelle 30 als Master-Oszillator-Verstärker-System 36 ist diese stabil gegenüber mechanischen Längenänderungen, wie sie beispielsweise durch Erschütterungen verursacht werden. Die Y-Cavity als Verstärker ist unkritisch bezüglich des genauen Abstands zwischen dem ersten Spiegel 50 und dem zweiten Spiegel 52.

Der OPO 32 wird entsprechend den Pumppulsen der Laserlichtquelle 30 zeitlich umgeschaltet, um die On-Line-Pulse und Off-Line-Pulse unterschiedlicher Wellenlängen zu erzeugen. Das vom OPO 32 erzeugte Licht, das heißt die Lichtpulse 16, 18, die in einer Lichtpulsfolge erzeugt werden, wird über einen Lichtfaserleiter 84 zu einer Sendeoptik 86 übertragen. Mittels der Sendeoptik 86 lässt sich das Laserlicht (das heißt die Lichtpulsfolge mit den Lichtpulsen 16, 18) auf das Messfeld 14 richten.

Durch den Lichtfaserleiter 84 lässt sich die Licht-Sendereinrichtung 12 räumlich von der Sendeoptik 86 trennen. Dadurch ist es möglich, wenn die Vorrichtung 28 beispielsweise durch einen Hubschrauber getragen ist, die Licht-Sendereinrichtung 12 in dem Hubschrauber anzuordnen, während die Sendeoptik 86 als Außenlast an dem Hubschrauber montierbar ist. Dadurch lassen sich die mechanischen Anforderungen für die Montage an dem Hubschrauber reduzieren. Es lässt sich dadurch auch berücksichtigen, dass die Detektionseinrichtung 24 für rückgestreutes Licht in der Nähe der Sendeoptik 86 angeordnet werden muss.

Der Lichtfaserleiter 84 ist beispielsweise mittels Saphirfasern hergestellt.

Zwischen dem OPO 32 und einer Einkopplungsstelle 88 für Licht in den Lichtfaserleiter 84 ist ein Strahlteiler 90 angeordnet. Über diesen lässt sich ein Teilstrahl des vom OPO 32 ausgekoppelten Lichts zu der Auswertungseinrichtung 26 führen, um für die Analyse des rückgestreuten Lichts 22 eine Referenz für das Sendelicht bereitzustellen.

Es ist beispielsweise vorgesehen, dass die On-Line-Wellenlänge der Lichtpulse 16 einer Absorptions-Wellenlänge von Methan oder Ethan entspricht; beim Methan liegt diese Wellenlänge zwischen 3200 nm und 3300 nm. Dies ist in der WO 2004/094968 A1 beschrieben, auf die ausdrücklich Bezug genommen wird.

Ein zeitlicher Abstand zwischen einem On-Line-Lichtpuls 16 und einem Off-Line-Lichtpuls 18 ist insbesondere dadurch bestimmt, dass an einem Beaufschlagungsbereich des Messfelds 14 die beiden Lichtpulse 16, 18 überlappen.

Wenn ein Träger der Vorrichtung 28 beweglich ist (die Vorrichtung 28 ist mobil ausgebildet), wie beispielsweise ein Hubschrauber, der über eine Erdgasleitung fliegt, dann beaufschlagen die Lichtpulse 16, 18 unterschiedliche Raumgebiete. Die Lichtpulse 18' können nicht mehr als Referenzpulse dienen, wenn sie von einem Beaufschlagungsbereich stammen, welcher von dem Beaufschlagungsbereich der Lichtpulse 16 verschieden ist.

Ein vorteilhafter Zeitabstand zwischen Lichtpulsen 16, 18 liegt in der Größenordnung 300 µs oder weniger. Durch die Licht-Sendereinrichtung 12 lassen sich entsprechende Lichtpulsfolgen erzeugen.

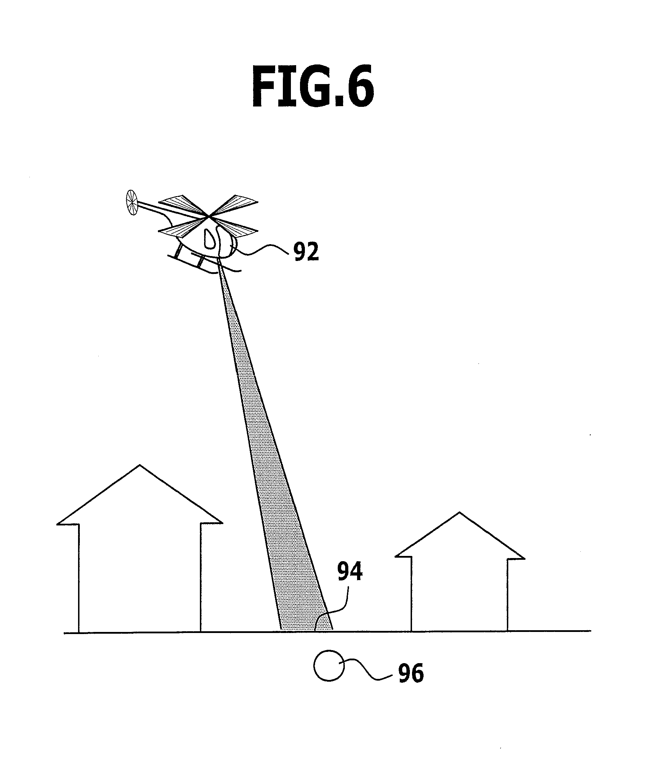

In Figur 6 ist schematisch ein Hubschrauber 92 als Fluggerät gezeigt, welches die Ferndetektionsvorrichtung 28 trägt. Der Hubschrauber 92 fliegt längs einer Leitungstrasse 94 mit einer oder mehreren Erdgasleitungen 96. Durch Lecks in der Erdgasleitung 96 können sich über dieser Gasansammlungen 20 bilden.

Die Sendeoptik 86 richtet das Sendelicht in einem Sendestrahl auf die Leitungstrasse 94 und die Detektionseinrichtung 24 empfängt das rückgestrahlte Licht 22.

Es kann dabei noch vorgesehen sein, dass eine Entfernungsmessung durchgeführt wird. Dadurch ist es beispielsweise möglich, den natürlichen Methanhintergrund in seiner Auswirkung auf das Messergebnis zu ermitteln und das Messergebnis dann entsprechend zu korrigieren. Über eine Entfernungsmessung lässt sich die Säule des natürlichen Methanhintergrunds in dem Beaufschlagungsbereich des Messfelds 14 ermitteln.

Dadurch, dass die Licht-Sendereinrichtung 12 als Laserlichtquelle 30 ein Master-Oszillator-Verstärker-System 36 umfasst, ist die Schwingungsanfälligkeit der Licht-Sendereinrichtung 12 gering. Weiterhin muss keine aktive Längenregelung eines Pumplaserresonators vorgesehen werden.

Die Laserlichtquelle 30 ist eine Seed-Quelle für die Verstärkereinrichtung 40.

## Patentansprüche

1. Ferndetektionsvorrichtung, umfassend eine Licht-Sendereinrichtung (12) mit einem optischen parametrischen Oszillator (32), eine Detektionseinrichtung (24) zur Detektion von rückgestreutem Licht (22), und eine Auswertungseinrichtung (26),
**dadurch gekennzeichnet , dass** die Licht-Sendereinrichtung (12) ein Master-Oszillator-Verstärker-System (36) umfasst, welches an den optischen parametrischen Oszillator (32) gekoppelt ist, mit einem Laseroszillator (38) als Master-Oszillator, welcher einen Monomoden-Pulsstrahl emittiert, und mit einer dem Laseroszillator (38) nachfolgenden Verstärkereinrichtung (40), welche das Laserlicht verstärkt, wobei die Verstärkereinrichtung (40) an den optischen parametrischen Oszillator (32) gekoppelt ist.

2. Ferndetektionsvorrichtung nach Anspruch 1, **dadurch gekennzeichnet, dass** der Laseroszillator (38) frequenzstabil ist.

3. Ferndetektionsvorrichtung nach Anspruch 1 oder 2, **dadurch gekennzeichnet, dass** der Laseroszillator (38) in Güteschaltung betrieben ist.

4. Ferndetektionsvorrichtung nach einem der vorangehenden Ansprüche,
**dadurch gekennzeichnet, dass** der Laseroszillator (38) stabil ist bezüglich des Abstandes von emittierten Pulsen.

5. Ferndetektionsvorrichtung nach einem der vorangehenden Ansprüche,
**dadurch gekennzeichnet, dass** der Laseroszillator (38) ein Mikrochiplaser oder ein monolithischer Ringlaser ist.

6. Ferndetektionsvorrichtung nach einem der vorangehenden Ansprüche,
**dadurch gekennzeichnet, dass** der Laseroszillator (38) eine kompakte Einheit bildet.

7. Ferndetektionsvorrichtung nach einem der vorangehenden Ansprüche,
**dadurch gekennzeichnet, dass** die Verstärkereinrichtung (40) ein Verstärkungsmedium (48) aufweist.

8. Ferndetektionsvorrichtung nach Anspruch 7, **dadurch gekennzeichnet, dass** die Verstärkereinrichtung (40) so ausgebildet ist, dass ein mindestens zweifacher Strahldurchgang durch das Verstärkungsmedium (48) erfolgt.

9. Ferndetektionsvorrichtung nach einem der vorangehenden Ansprüche,
**dadurch gekennzeichnet, dass** die Verstärkereinrichtung (40) so ausgebildet ist, dass ein vierfacher Strahldurchgang durch das Verstärkungsmedium (48) erfolgt.

10. Ferndetektionsvorrichtung nach einem der vorangehenden Ansprüche,
**dadurch gekennzeichnet, dass** die Verstärkereinrichtung (40) eine Y-Cavity (57) umfasst.

11. Ferndetektionsvorrichtung nach Anspruch 10, **dadurch gekennzeichnet, dass** die Y-Cavity (57) einen ersten Spiegel (50) und einen zweiten Spiegel (52) umfasst, zwischen denen bezogen auf den Strahlgang ein Verstärkungsmedium (48) angeordnet ist.

12. Ferndetektionsvorrichtung nach Anspruch 11, **dadurch gekennzeichnet, dass** bezogen auf den Strahldurchgang zwischen dem Verstärkungsmedium (48) und dem ersten Spiegel (50) ein Polarisationsrotator (60) angeordnet ist.

13. Ferndetektionsvorrichtung nach Anspruch 11 oder 12, **dadurch gekennzeichnet, dass** dem zweiten Spiegel (52) ein Polarisator (56) zugeordnet ist.

14. Ferndetektionsvorrichtung nach Anspruch 13, **dadurch gekennzeichnet, dass** der Polarisator (56) reflektierend ausgebildet ist, wobei ein Lichtstrahl vom Verstärkungsmedium (48) durch den Polarisator (56) zum zweiten Spiegel (52) richtbar ist.

15. Ferndetektionsvorrichtung nach Anspruch 14, **dadurch gekennzeichnet, dass** ein Lichtstrahl vom zweiten Spiegel (52) durch den Polarisator (56) zum Verstärkungsmedium (48) richtbar ist.

16. Ferndetektionsvorrichtung nach einem der Ansprüche 13 bis 15, **dadurch gekennzeichnet, dass** der Polarisator (56) für Licht durchlässig ist, wobei die Durchlässigkeit abhängig von der Lichtpolarisation ist.

17. Ferndetektionsvorrichtung nach einem der vorangehenden Ansprüche,
**dadurch gekennzeichnet, dass** die Verstärkereinrichtung (40) mindestens eine Nachverstärkungsstufe (78) umfasst.

18. Ferndetektionsvorrichtung nach einem der vorangehenden Ansprüche,
**dadurch gekennzeichnet, dass** ein Verstärkungsfaktor durch die Verstärkereinrichtung (40) bezogen auf die Pulsenergie eines einzelnen Pulses des Laseroszillators (38) mindestens 200 ist.

19. Ferndetektionsvorrichtung nach einem der vorangehenden Ansprüche,
**dadurch gekennzeichnet, dass** die Pulsenergie eines Pulses, welcher dem optischen parametrischen Oszillator (32) zugeführt wird, mindestens 10 mJ ist.

20. Ferndetektionsvorrichtung nach einem der vorangehenden Ansprüche,
**dadurch gekennzeichnet, dass** ein Pulsabstand für die vom Laseroszillator (38) emittierten Pulse im Bereich zwischen 25 µs und 200 µs liegt.

21. Ferndetektionsvorrichtung nach einem der vorangehenden Ansprüche,
**dadurch gekennzeichnet, dass** eine Zuführung von Doppelpulsen (82) zu dem optischen parametrischen Oszillator (32) vorgesehen ist.

22. Ferndetektionsvorrichtung nach Anspruch 21, **dadurch gekennzeichnet, dass** eine Doppelpulsfrequenz größer 150 Hz ist.

23. Ferndetektionsvorrichtung nach Anspruch 21 oder 22, **dadurch gekennzeichnet, dass** der Abstand von Pulsen in einem Pulspaar (82) zwischen 25 µs und 200 µs liegt.

24. Ferndetektionsvorrichtung nach einem der vorangehenden Ansprüche,
**dadurch gekennzeichnet, dass** eine Steuerungseinrichtung (64) zur Synchronisierung der Pulseinkopplung in die Verstärkereinrichtung (40) vorgesehen ist.

25. Ferndetektionsvorrichtung nach einem der vorangehenden Ansprüche,
**dadurch gekennzeichnet, dass** eine Mehrfachpuls-Formungseinrichtung (69; 69') zur Erzeugung von Mehrfachpulsen vorgesehen ist.

26. Ferndetektionsvorrichtung nach Anspruch 25, **dadurch gekennzeichnet, dass** durch die Mehrfachpuls-Formungseinrichtung (69; 69') Doppelpulse (82) generiert werden.

27. Ferndetektionsvorrichtung nach Anspruch 25 oder 26, **dadurch gekennzeichnet, dass** die Mehrfachpuls-Formungseinrichtung (69) eine Pulsschneideeinrichtung (70) umfasst, welche dem Laseroszillator (38) nachgeordnet ist.

28. Ferndetektionsvorrichtung nach einem der Ansprüche 25 bis 27, **dadurch gekennzeichnet, dass** die Mehrfachpuls-Formungseinrichtung (69') eine Steuerungseinrichtung (102) umfasst, über welche die Verstärkung in der Verstärkereinrichtung (40) so steuerbar ist, dass Mehrfachpulse einer vorgegebene Repetitionsrate erzeugbar sind.

29. Ferndetektionsvorrichtung nach Anspruch 28, **dadurch gekennzeichnet, dass** die Steuerungseinrichtung (102) mit dem Laseroszillator (38) zur Synchronisierung mit der Verstärkereinrichtung (40) gekoppelt ist.

30. Ferndetektionsverfahren, bei dem Lichtpulse auf ein Messfeld gerichtet werden und rückgestreutes Licht detektiert wird, wobei das Sendelicht mittels eines optischen parametrischen Oszillators erzeugt wird,
**dadurch gekennzeichnet , dass** dem optischen parametrischen Oszillator Lichtpulse durch ein Master-Oszillator-Verstärker-System bereitgestellt werden.

31. Ferndetektionsverfahren nach Anspruch 30, **dadurch gekennzeichnet, dass** das Master-Oszillator-Verstärker-System dem optischen parametrischen Oszillator Doppelpulse bereitstellt.

32. Ferndetektionsverfahren nach Anspruch 31, **dadurch gekennzeichnet, dass** die Doppelpulse durch Pulsschneiden erzeugt werden.
